(19) **Europäisches Patentamt / European Patent Office / Office européen des brevets**

(11) **EP 3 852 020 A1**

(12) **EUROPEAN PATENT APPLICATION**

(43) Date of publication:
21.07.2021 Bulletin 2021/29

(51) Int Cl.:
**G06N 3/12** (2006.01)    **G06N 20/20** (2019.01)
**G06N 5/00** (2006.01)

(21) Application number: 21151825.3

(22) Date of filing: 15.01.2021

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
KH MA MD TN

(30) Priority: 16.01.2020 CN 202010049162

(71) Applicant: BEIJING BAIDU NETCOM SCIENCE AND
TECHNOLOGY CO. LTD.
100085 Beijing (CN)

(72) Inventors:
• SHENG, Wenjia
  Beijing, 100085 (CN)
• WU, Mingdan
  Beijing, 100085 (CN)
• GAO, Chunxu
  Beijing, 100085 (CN)
• YE, Jun
  Beijing, 100085 (CN)

(74) Representative: Brevalex
95, rue d'Amsterdam
75378 Paris Cedex 8 (FR)

(54) **CLASSIFICATION MODEL TRAINING AND USE METHODS AND APPARATUSES, DEVICE, AND MEDIUM**

(57) Classification model training and use methods and apparatuses, a device and a medium are provided, which are related to a field of artificial intelligence technology. The training method includes: training a classification model by utilizing a training sample set and adopting an ensemble learning algorithm, to obtain at least one classifier set including at least two base classifiers; and testing the at least one classifier set by utilizing a test sample set, to determine classification performances of respective base classifiers, and determining classification weights of the respective base classifiers according to the classification performances, wherein the classification weights are used for determining weights of classification results of the respective base classifiers during performing a sample classification using the at least one classifier set.

S110
training a classification model by utilizing a training sample set and adopting an ensemble learning algorithm, to obtain at least one classifier set comprising at least two base classifiers

S120
testing the at least one classifier set by utilizing a test sample set, to determine classification performances of respective base classifiers, and determining classification weights of the respective base classifiers according to the classification performances, wherein the classification weights are used for determining weights of classification results of the respective base classifiers during performing a sample classification using the at least one classifier set

**FIG. 1**

EP 3 852 020 A1

## Description

## TECHNICAL FIELD

The present application relates to a field of computer technology, and in particular, to an artificial intelligence technology.

## BACKGROUND

In recent years, with a rapid development of big data and the artificial intelligence technology, the speech image recognition, the natural language processing and the knowledge graph have become hot research areas. Classification is the most typical problem in the field of machine learning and data mining.

However, in practical application scenarios, most classified datasets have an apparent imbalanced distribution of categories, that is, among same data samples, the number of samples of certain categories is far more than the number of samples of one or several other categories. Such datasets are called as category imbalanced datasets, which are likely to cause a trained model to have a poor performance and cannot achieve an ideal application effect or application performance.

## SUMMARY

According to embodiments of the present application, classification model training and use methods and apparatuses, a device and a medium are provided, to improve the applicability of a classification model to imbalanced samples.

A classification model training method is disclosed according to an embodiment of the present application. The method includes:

training a classification model by utilizing a training sample set and adopting an ensemble learning algorithm, to obtain at least one classifier set including at least two base classifiers; and
testing the at least one classifier set by utilizing a test sample set, to determine classification performances of respective base classifiers, and determining classification weights of the respective base classifiers according to the classification performances, wherein the classification weights are used for determining weights of classification results of the respective base classifiers during performing a sample classification using the at least one classifier set.

By applying above embodiment, following advantages or beneficial effects may be achieved: at least one classifier set is obtained by training, and classification weights of respective base classifiers in the at least one classifier are determined according to classification performances thereof, to determine a final category during classification in conjunction with weights, thereby overcoming the problem that a classification model has a poor processing performance for imbalanced data, ensuring the diversity of base classifiers in an ensemble learning, and enabling classifiers to have same classification performances for minority and majority categories, so that a classification model is applicable to a case of imbalanced samples.

Further, training the classification model by utilizing the training sample set and adopting the ensemble learning algorithm, to obtain the at least one classifier set includes:

training the classification model by utilizing the training sample set and adopting a multi-objective genetic programming algorithm, to obtain the at least one classifier set;
wherein a plurality of training objectives of each of the at least one classifier set at least include: an amount of positive samples misclassified by the classification model is minimum; and an amount of negative samples misclassified by the classification model is minimum.

Accordingly, by applying above embodiment, following advantages or beneficial effects may be achieved: by setting a plurality of training objectives of each of classifier sets, it ensures that classifiers have same classification performances for minority and majority categories of data, and avoids the classification accuracy of whole data by a classification model from being affected by different classification performances for minority and majority categories of data.

Further, the classification model includes a plurality of classifier sets corresponding to different categories, respectively.

Accordingly, by applying above embodiment, following advantages or beneficial effects may be achieved: by setting a plurality of classifier sets which correspond to different categories, respectively, a classification model of multi-classification may be trained, thereby improving the performance thereof.

Further, the classification performances of the base classifiers include at least one of: a precision rate, a recall rate, a geometric mean of the precision rate and the recall rate, and a harmonic mean of the precision rate and the recall rate.

Accordingly, by applying above embodiment, following advantages or beneficial effects may be achieved: by taking above indicators as classification performances to evaluate base classifiers and determine weights thereof, the weights maybe enabled to fully reflect the performance and applicability of the base classifiers in classification of training samples.

Further, testing the at least one classifier set by utilizing the test sample set, to determine the classification performances of the respective base classifiers, and determining the classification weights of the respective base classifiers according to the classification performances includes:

testing the at least one classifier set by utilizing the test sample set, and determining statistically an amount of misclassified positive samples and an amount of misclassified negative samples, wherein the amount of misclassified positive samples is an amount of negative samples in the test samples misclassified by the respective base classifiers as positive samples, and the amount of misclassified negative samples is an amount of positive samples in the test samples misclassified by the respective base classifiers as negative samples;
determining a maximum amount of the misclassified positive samples and a maximum amount of the misclassified negative samples based on the determined amount of the misclassified positive samples and the determined amount of the misclassified negative samples; and
determining the classification weights of the respective base classifiers according to a proportional relationship between the determined amount of the misclassified positive samples of the respective base classifiers and the maximum amount of the misclassified positive samples, and a proportional relationship between the determined amount of the misclassified negative samples of the respective base classifiers and the maximum amount of the misclassified negative samples.

Accordingly, by applying above embodiment, following advantages or beneficial effects may be achieved: by determining classification weights of respective base classifiers according to a proportional relationship between a determined amount of misclassified positive samples of the respective base classifiers and a maximum amount of the misclassified positive samples, and a proportional relationship between a determined amount of misclassified negative samples of the respective base classifiers and a maximum amount of the misclassified negative samples, the classification weights may more comprehensively reflect the classification performances of base classifiers for positive and negative samples, respectively.

Further, determining the classification weights of the respective base classifiers according to the proportional relationship between the determined amount of the misclassified positive samples of the respective base classifiers and the maximum amount of the misclassified positive samples, and the proportional relationship between the determined amount of the misclassified negative samples of the respective base classifiers and the maximum amount of the misclassified negative samples includes:
determining the classification weights $w_j$ of the respective base classifiers according to a formula as follows:

$$w_j = \left(1.0 - \frac{N_{fp}^j}{N_{fp}^{max}}\right)\left(1.0 - \frac{N_{fn}^j}{N_{fn}^{max}}\right),$$

wherein $N_{fp}^j$ is an amount of misclassified positive samples, $N_{fn}^j$ is an amount of misclassified negative samples, $N_{fp}^{max}$ is a maximum amount of misclassified positive samples, and $N_{fn}^{max}$ is a maximum amount of misclassified negative samples, and j is an amount of the base classifiers, which is a positive integer greater than or equal to 2.

Accordingly, by applying above embodiment, following advantages or beneficial effects may be achieved: from the above formula, classification weights of base classifiers may be determined according to the proportional relationship between a determined amount of misclassified positive samples of respective base classifiers and a maximum amount of the misclassified positive samples, and the proportional relationship between a determined amount of misclassified negative samples of respective base classifiers and a maximum amount of the misclassified negative samples, so that classification weights may more comprehensively reflect classification performances of base classifier for positive and negative samples, respectively.

Further, after determining the classification weights of the respective base classifiers, the method further includes:
determining, for the classification weights of the respective base classifiers in each classifier set, a weight of a category corresponding to the classifier set as a category weight of the classifier set, in response to a plurality of classifier sets being obtained.

Accordingly, by applying above embodiment, following advantages or beneficial effects may be achieved: a category weight of a classifier set is determined through classification weights of respective base classifiers in the classifier set, so that the category weight may comprehensively reflect an overall classification performance of the classifier set, and the classifier set may have a wider applicability when classifying in conjunction with the category weight thereof.

Further, determining, for the classification weights of the respective base classifiers in each classifier set, the weight of the category corresponding to the classifier set includes:
accumulating the classification weights of the respective base classifiers in each classifier set, to obtain an accumulated weight, and determining the accumulated weight as the weight of the category corresponding to the classifier set.

Accordingly, by applying above embodiment, following advantages or beneficial effects may be achieved: a classifier set is enabled to include classification performances of respective base classifiers, to comprehensively determine a category weight of the classifier set, so that a classifier set may have a wider applicability when classifying in conjunction with the category weight thereof.

Further, the training sample set and the test sample set are the same as or different from each other, attributes of sample data and labeled category ranges in the training sample set and the test sample set are the same.

Accordingly, by applying above embodiment, following advantages or beneficial effects may be achieved: through above selection solutions of training samples and test samples, samples may cover a wide range of sample features, and have a feature consistency for a same attribute, so that the reference value of samples is increased, and the training accuracy of a classification model is improved.

According to an embodiment of the present application, a classification model use method is further disclosed, wherein a classification model is obtained by performing a training using the classification model training method according to any one of above embodiments. The classification model use method includes:

inputting data to be classified into at least one classifier set of the classification model, and performing a calculation by respective base classifiers, to output classification probabilities;

determining the classification results output by the respective base classifiers according to the classification probabilities and the classification weights of the respective base classifiers; and

determining a category of the data to be classified according to the classification results of the respective base classifiers in the at least one classifier set.

Accordingly, by applying above embodiment, following advantages or beneficial effects may be achieved: classification results are determined by taking classification probabilities and classification weights of respective base classifiers into account, and a category of data to be classified is determined, so that classification weights determined according to classification performances of respective base classifiers are integrated into a classification process, thereby improving an overall classification accuracy, which is suitable for a classification of imbalanced data.

Further, in case that a plurality of classifier sets are obtained, determining the category of the data to be classified according to the classification results of the respective base classifiers in the classifier set includes:

accumulating, for each of the plurality of classifier sets, classification results of respective base classifiers in each classifier set, respectively, to obtain category classification results of respective classifier sets; and

performing an accumulation based on the category classification results and category weights of the respective classifier sets, to obtain the category of the data to be classified.

Accordingly, by applying above embodiment, following advantages or beneficial effects may be achieved: classification results of a plurality of base classifiers may be comprehensively taken into account, so that a category of obtained classified data is more accurate.

According to an embodiment of the present application, a classification model training apparatus is disclosed. The apparatus includes:

a training module, configured to train a classification model by utilizing a training sample set and adopting an ensemble learning algorithm, to obtain at least one classifier set including at least two base classifiers; and

a testing module, configured to test the at least one classifier set by utilizing a test sample set, to determine classification performances of respective base classifiers, and determining classification weights of the respective base classifiers according to the classification performances,

wherein the classification weights are used for determining weights of classification results of the respective base classifiers during performing a sample classification using the at least one classifier set.

Further, the training module includes:

a classifier set determination unit, configured to train the classification model by utilizing the training sample set and adopting a multi-objective genetic programming algorithm, to obtain the at least one classifier set,

wherein a plurality of training objectives of each of the at least one classifier set at least include: an amount of positive samples misclassified by the classification model is minimum; and an amount of negative samples misclassified by the classification model is minimum.

Further, the classification model includes a plurality of classifier sets corresponding to different categories, respectively.

Further, the classification performances of the base classifiers include at least one of: a precision rate, a recall rate, a geometric mean of the precision rate and the recall rate, and a harmonic mean of the precision rate and the recall rate.

Further, the testing module includes:

an amount counting unit, configured to test the at least one classifier set by utilizing the test sample set, and determine statistically an amount of misclassified positive samples and an amount of misclassified negative samples, wherein the amount of misclassified positive samples is an amount of negative samples in the test samples misclassified by the respective base classifiers as positive samples, and the amount of misclassified negative samples is an amount of positive samples in the test samples misclassified by the respective base classifiers as negative samples;

a maximum amount determination unit, configured to determine a maximum amount of the misclassified positive samples and a maximum amount of the misclassified negative samples based on the determined amount of the misclassified positive samples and the determined amount of the misclassified negative samples; and

a classification weight determination unit, configured to determine the classification weights of the respective base classifiers according to a proportional relationship between the determined amount of the misclassified positive samples of the respective base classifiers and the maximum amount of the misclassified positive samples, and a proportional relationship between the determined amount of the misclassified negative samples of the respective base classifiers and the maximum amount of the misclassified negative samples.

Further, the classification weight determination unit includes:

a formula calculation sub-unit, configured to determine the classification weights $w_j$ of the respective base classifiers according to a formula as follows:

$$w_j = \left(1.0 - \frac{N_{fp}^j}{N_{fp}^{max}}\right)\left(1.0 - \frac{N_{fn}^j}{N_{fn}^{max}}\right),$$

wherein $N_{fp}^j$ is an amount of misclassified positive samples, $N_{fn}^j$ is an amount of misclassified negative samples, $N_{fp}^{max}$ is a maximum amount of misclassified positive samples, $N_{fn}^{max}$ is a maximum amount of misclassified negative samples, and j is an amount of the base classifiers, which is a positive integer greater than or equal to 2.

Further, the apparatus includes:

a category weight determination module, configured to determine, for the classification weights of the respective base classifiers in each classifier set, a weight of a category corresponding to the classifier set as a category weight of the classifier set, in response to a plurality of classifier sets being obtained.

Further, the category weight determination module is specifically configured to:

accumulate the classification weights of the respective base classifiers in each classifier set, to obtain an accumulated weight, and determining the accumulated weight as the weight of the category corresponding to the classifier set.

Further, the training sample set and the test sample set are the same as or different from each other, attributes of sample data and labeled category ranges in the training sample set and the test sample set are the same.

According to an embodiment of the present application, a classification model use apparatus is further disclosed, wherein a classification model is obtained by performing a training using the above classification model training method. The apparatus includes:

a calculation module, configured to input data to be classified into at least one classifier set of the classification model, and perform a calculation by respective base classifiers, to output classification probabilities;

a classification result determination module, configured to determine the classification results output by the respective base classifiers according to the classification probabilities and the classification weights of the respective base classifiers; and

a category determination module, configured to determine a category of the data to be classified according to the classification results of the respective base classifiers in the at least one classifier set.

Further, in case that a plurality of classifier sets are obtained, the category determination module includes:

a classification result determination unit, configured to accumulate, for each of the plurality of classifier sets, classification results of respective base classifiers in each classifier set, repsectively, to obtain category classification results of respective classifier sets; and

an accumulation unit, configured to perform an accumulation based on the category classification results and category weights of the respective classifier sets, to obtain the category of the data to be classified.

According to an embodiment of the present application, a device is further disclosed. The device includes:

at least one processor; and
a memory communicatively connected to the at least one processor, wherein
the memory stores instructions executable by the at least one processor, the instructions are executed by the at least one processor to enable the at least one processor to perform the classification model training method according to any one of embodiments of the present application, or the classification model use method according to any one of embodiments of the present application.

According to an embodiment of the present application, it is further disclosed a non-transitory computer-readable storage medium for storing computer instructions, wherein the computer instruction, when executed by a computer, cause the computer to perform the classification model training method according to any one of embodiments of the present application, or the classification model use method according to any one of embodiments of the present application.

Other effects of above optional manners will be explained later in conjunction with specific embodiments.

**BRIEF DESCRIPTION OF THE DRAWINGS**

The drawings are used to better understand the scheme and do not constitute a limitation to the present application. In which,

FIG. 1 is a schematic flowchart showing a classification model training method provided according to an embodiment of the present application;
FIG. 2 is a schematic flowchart showing another classification model training method provided according to an embodiment of the present application;
FIG. 3 is a flowchart showing a specific implementation of a classification model training method provided according to an embodiment of the present application;
FIG. 4 is a schematic flowchart showing a classification model use method according to an embodiment of the present application;
FIG. 5 is a structural diagram showing a classification model training apparatus provided according to an embodiment of the present application;
FIG. 6 is a structural diagram showing a classification model use apparatus provided according to an embodiment of the present application; and
FIG. 7 is a block diagram showing a device for implementing a classification model training method provided according to an embodiment of the present application.

**DETAILED DESCRIPTION OF THE EMBODIMENTS**

Exemplary embodiments of the application will be described below in combination with drawings, including various details of the embodiments of the present application to facilitate understanding, which should be considered as exemplary only. Therefore, those of ordinary skill in the art should realize that various changes and modifications can be made to the embodiments described herein without departing from the scope and spirit of the present application. Likewise, descriptions of well-known functions and structures are omitted in the following description for clarity and conciseness.

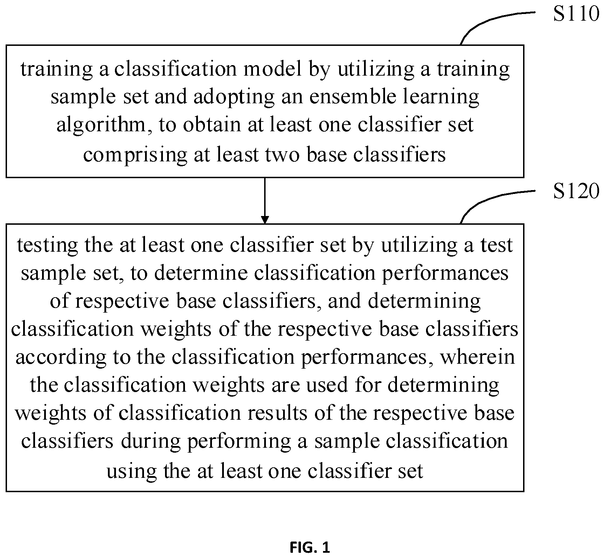

FIG. 1 is a flowchart showing a classification model training method provided according to an embodiment of the present application. At present, many classification algorithms have been applied, where it is difficult for the Bayesian method to obtain a data distribution probability accurately, the decision tree method should depend on data characteristics to find an optimal attribute set to build a decision tree, the support vector machine method has a degraded classification performance when sample data is large, and it is difficult for the genetic programming method to determine an appropriate fitness function to guide an evolution process of a classifier. In addition, at present most of the classification algorithms treat imbalanced data as balanced data, which usually results in a situation that the classification accuracy is high for samples of a large number, and very low for samples of a small number, while the samples of a small number probably may be important samples in a classification process, it may result in a trained classification model having a poor performance. Ensemble learning is an important branch to solve the problem of imbalanced classification. An ensemble classifier has a better generalization ability owing to a plurality of classifiers, and usually achieves a more accurate classification result than a single classifier. The present embodiments may be applied for training a classification model to solve an above problem and is suitable to a case of imbalanced data. Typically, based on ensemble learning, the present embodiment determines weights in conjunction with classification performances of base classifiers, so that a classification model built according to the base classifiers may be applied to majority and minority categories of samples. A classification model training method disclosed in the present embodiments may be performed by a classification model training apparatus which may be implemented by software and/or hardware. Referring to FIG. 1, a classification model training method provided in the present embodiment includes:

S110: training a classification model by utilizing a training sample set and adopting an ensemble learning algorithm, to obtain at least one classifier set including at least two base classifiers.

A training sample set may be any type of sample set, such as image training samples, text training samples, or speech training samples, including labeled classification results. A base classifier may be an individual classifier and obtained by training according to training data based on the learning algorithm, and it is a functional relationship represented by a tree structure, wherein a depth of the tree structure may be set according to actual situations and may be unfixed. The number of base classifiers, such as 5 to 10, may be set according to actual situations. Generally, a classification result output from a base classifier is binary. For example, a result indicating whether a sample belongs to a category is output, and if the sample belong to the category, the sample is a positive sample, or if not, the sample is a negative sample. A calculation result may be represented with a probability, and a positive sample or a negative sample may be determined according to a probability threshold and represented by 1 or 0.

According to different application scenarios, a classifier set may be trained by utilizing a training sample set and adopting an ensemble learning algorithm, to determine a classifier set, where each of classifier sets includes at least two base classifiers, to improve the applicability of the classifier set to imbalanced data or diversified data and avoid the problem of large classification error caused by a single base classifier. The classified categories of training samples may be two or more. When the classified categories of training samples are two, e.g., when it is determined whether a person in an image is a target person, a classifier set may be initialized, and the amount thereof may be one. When the classified categories of training samples are more than two, e.g., when it is distinguished which one of a current news category, an entertainment category and a family life category a document belongs to, the classifier set may be initialized. In a classification model, there may be a plurality of classifier sets which correspond to different categories, respectively. The number of classifier sets may be determined according to the number of classified categories of training samples, e.g., being consistent therewith.

For example, a training sample set is input into each of base classifiers for training. Regarding an output result of respective base classifiers, a fitness is evaluated according to sample labeling results in the training sample set, and the functions of the base classifiers are updated and iterated according to a fitness result and an evolutionary operator. It is determined whether an iteration termination condition is met, e.g., whether a set target is met, or the number of iterations reaches a set upper limit value. Above respective base classifiers may be trained in parallel, to improve the training efficiency. A plurality of base classifiers obtained by learning are taken as a Pareto optimal solution set.

S120: testing the at least one classifier set by utilizing a test sample set, to determine classification performances of respective base classifiers, and determining classification weights of the respective base classifiers according to the classification performances, wherein the classification weights are used for determining weights of classification results of the respective base classifiers during performing a sample classification using the at least one classifier set.

The test sample set may be the same as or different from the training sample set, including the labeled classification results. The attributes of sample data in the training sample set and the test sample set are the same, and the labeled category ranges are also the same. 'Same' means that a test sample set and a training sample set are composed of identical data. 'Different' means that although the training sample set and test sample set are of the same type, specific data are different. Since one classification model performs a classification for one application scenario, the attributes of a training sample set and a test sample set are the same, e.g., both being a length, a keyword, an author or a topic, etc. of a document, and the labeled category ranges thereof are also the same, e.g., both belonging to one of a current news category, an entertainment category and a family life category. Attributes of a training sample set and a test sample set may be set according to actual situations.

The classification performances of the base classifiers include at least one of: a precision rate, a recall rate, a geometric mean of the precision rate and the recall rate, and a harmonic mean of the precision rate and the recall rate.

Specific explanations are given as follows:
A precision rate is proposed for a prediction result and represents the number of samples tested as positive samples and actually marked as positive samples. There are two possibilities for a prediction of positive samples, one is to predict positive samples among test samples as positive samples, denoted by TP, and the other is to predict negative samples among test samples as positive samples, denoted by FP, so the precision rate P is $\frac{TP}{TP+FP}$.

A recall rate is proposed for a test sample set and represents the number of correct predictions when samples are tested as positive samples. There are two possibilities, one is to predict positive samples among test samples as positive samples, denoted by TP, and the other is to predict positive samples among test samples as negative samples, denoted by FN, so the recall TP rate R is $\frac{TP}{TP+FN}$.

A geometric mean G of a precision rate and a recall rate is $\sqrt{P * R}$. A harmonic mean F of a precision rate and a recall rate is $\frac{P*R*2}{P+R}$.

For example, in a case of binary classification, classification weights of respective base classifiers may be determined according to above classification performances. Of course, a determination of performances of base classifiers is not limited to above indicators.

Optionally, after determining the classification weights of the respective base classifiers, the method further includes determining, for the classification weights of the respective base classifiers in each classifier set, a weight of a category corresponding to the classifier set as a category weight of the classifier set, in response to a plurality of classifier sets being obtained.

The determining, for the classification weights of the respective base classifiers in each classifier set, the weight of the category corresponding to the classifier set includes accumulating the classification weights of the respective base classifiers in each classifier set, to obtain an accumulated weight, and determining the accumulated weight as the weight of the category corresponding to the classifier set.

Specifically, since a classifier set includes at least two base classifiers, the weight of a classifier set may be determined by weights of all of the base classifiers included therein together to reflect the comprehensive performance of the classifier set. Classification weights of respective base classifiers may be accumulated as a category weight of a classifier set, so that the category weight may include weight influences of respective base classifiers and reflect the comprehensive performance of the classifier set.

For example, when a classifier set is utilized for sample classification, data to be classified may be input into at least one classifier set of a classification model, and a calculation may be performed by each of base classifiers, to output a classification probability. Classification results output from each of base classifiers are determined according to classification probabilities and classification weights of respective base classifiers, and the category of data to be classified is determined according to the classification results of the respective base classifiers in a classifier set.

According to a technical solution of an embodiment of the present application, at least one classifier set is obtained by training, and classification weights of respective base classifiers in the at least one classifier are determined according to classification performances thereof, to determine a final category during classification in conjunction with weights, thereby overcoming the problem that a classification model has a poor processing performance for imbalanced data, ensuring the diversity of base classifiers in an ensemble learning, and enabling classifiers to have same classification performances for minority and majority categories, so that a classification model is applicable to a case of imbalanced samples.

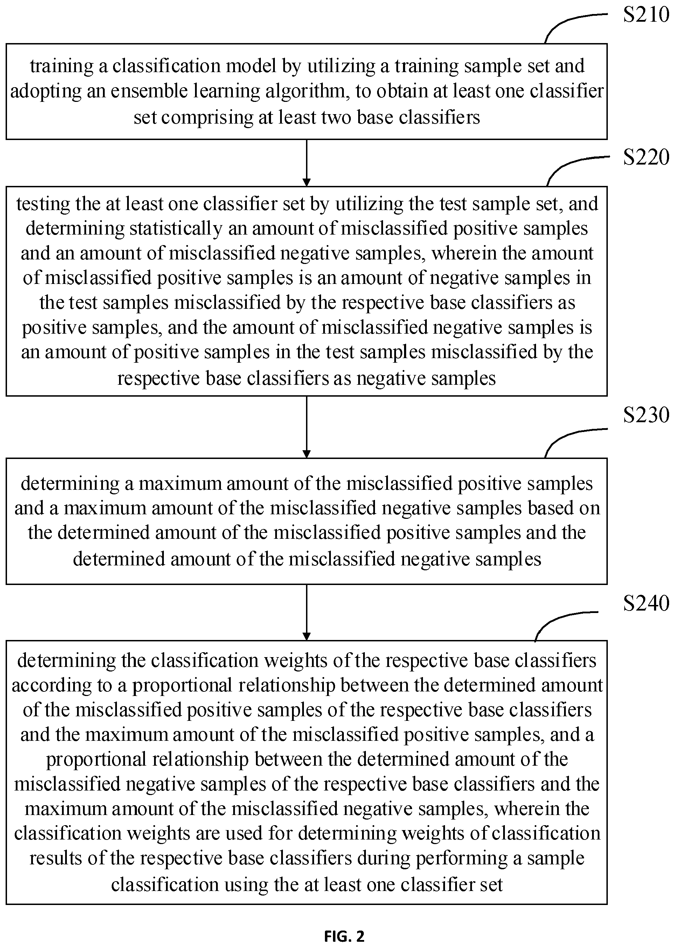

FIG. 2 is a schematic flowchart showing another classification model training method provided according to an embodiment of the present application. This embodiment is an optional solution based on above embodiment. Referring to FIG. 2, the classification model training method provided in this embodiment includes:

S210: training the classification model by utilizing the training sample set and adopting the ensemble learning algorithm, to obtain the at least one classifier set including at least two base classifiers.

Optionally, training the classification model by utilizing the training sample set and adopting the ensemble learning algorithm, to obtain the at least one classifier set includes: training the classification model by utilizing the training sample set and adopting a multi-objective genetic programming algorithm, to obtain the at least one classifier set, where a plurality of training objectives of each of the at least one classifier set at least include: an amount of positive samples misclassified by the classification model is minimum; and an amount of negative samples misclassified by the classification model is minimum.

The multi-objective genetic programming algorithm is to utilize a genetic algorithm to solve a multi-objective programming problem. An objective may be a termination of training or a fitness evaluation. In a process of training, a training result approaches an objective infinitely. A multi-objective programming is to determine multiple objectives for determining the performance of a classification model, to avoid the problem that it is difficult to accurately determine the performance of a classification model with just one indicator and be suitable for the sample classification of imbalanced samples, which takes into account the case of imbalanced samples, so that different base classifiers in the classifier set may focus on the processing of different imbalanced samples. Multiple training objectives may be set according to actual situations, such as the number of positive samples misclassified by a model is minimum, the number of negative samples misclassified by a model is minimum, a sum of the number of positive samples misclassified by a model and the number of negative samples misclassified by a model is minimum, a difference between the number of positive samples misclassified by a model and the number of negative samples misclassified by a model is minimum, etc., to comprehensively evaluate the classification performance of a classification model through more indicators that may reflect the classification effect of the classification model.

S220: testing the at least one classifier set by utilizing the test sample set, and determining statistically an amount of misclassified positive samples and an amount of misclassified negative samples. wherein the amount of misclassified positive samples is an amount of negative samples in the test samples misclassified by the respective base classifiers as positive samples, and the amount of misclassified negative samples is an amount of positive samples in the test samples misclassified by the respective base classifiers as negative samples.

The misclassified positive samples are test samples having test classification results as positive samples while actual labelled as negative samples. The misclassified negative samples are test samples having test classification results as negative samples while actual labelled as positive samples. The number of positive samples and the number of negative samples misclassified by each of base classifiers are counted to determine the ability of the base classifiers for distinguishing positive and negative samples in a classification process, to evaluate classification performances of the base classifiers, where the number of misclassifications is lesser, the classification performance for positive samples or negative samples of a base classifier is better. In this way, classification performances of base classifiers may be evaluated.

S230: determining a maximum amount of the misclassified positive samples and a maximum amount of the misclassified negative samples based on the determined amount of the misclassified positive samples and the determined amount of the misclassified negative samples.

For example, for respective base classifiers in a classifier set, since the number of misclassified positive samples and the number of misclassified negative samples among test samples may vary, a maximum amount of the misclassified positive samples and a maximum amount of the misclassified negative samples are selected therefrom to determine weights of base classifiers.

S240: determining the classification weights of the respective base classifiers according to a proportional relationship between the determined amount of the misclassified positive samples of the respective base classifiers and the maximum amount of the misclassified positive samples, and a proportional relationship between the determined amount of the misclassified negative samples of the respective base classifiers and the maximum amount of the misclassified negative samples, wherein the classification weights are used for determining weights of classification results of the respective base classifiers during performing a sample classification using the at least one classifier set.

Optionally, determining the classification weights of the respective base classifiers according to the proportional relationship between the determined amount of the misclassified positive samples of the respective base classifiers and the maximum amount of the misclassified positive samples, and the proportional relationship between the determined amount of the misclassified negative samples of the respective base classifiers and the maximum amount of the misclassified negative samples includes:

determining the classification weights $w_j$ of the respective base classifiers according to a formula as follows:

$$w_j = \left(1.0 - \frac{N_{fp}^j}{N_{fp}^{max}}\right)\left(1.0 - \frac{N_{fn}^j}{N_{fn}^{max}}\right) ,$$

wherein $N_{fp}^j$ is an amount of misclassified positive samples, $N_{fn}^j$ is an amount of misclassified negative samples, $N_{fp}^{max}$ is a maximum amount of misclassified positive samples, $N_{fn}^{max}$ is a maximum amount of misclassified negative samples, and j is an amount of the base classifiers, which is a positive integer greater than or equal to 2.

Specifically, through a proportional relationship between a determined amount of misclassified positive samples of respective base classifiers and a maximum amount of the misclassified positive samples, and a proportional relationship between the a determined amount of misclassified negative samples of respective base classifiers and a maximum amount of the negative samples, not only the classification performances of base classifiers for positive and negative samples may be reflected, but also relative classification performances of base classifiers for positive and negative samples compared with other base classifiers among all of the base classifiers may be reflected. As a proportion increases, the classification performance of a base classifier for respective samples becomes worser. A corresponding classification weight should be small, so that a classification weight may accurately reflect classification performances of base classifiers.

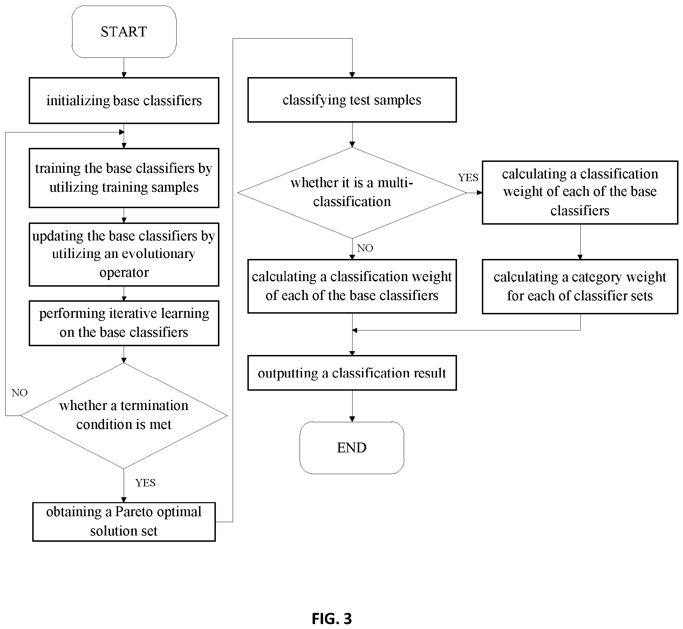

FIG. 3 is a flowchart showing a specific implementation of a classification model training method provided according to an embodiment of the present application. As shown in FIG. 3, in a training stage, a plurality of base classifiers are trained by adopting a multi-objective genetic programming algorithm, and each of base classifiers are trained by utilizing a training sample set. It is determined whether a learning termination condition is met, e.g., whether a set target is met, or the number of iterations reaches a set upper limit value. If a learning termination condition is met, the training is terminated, and a plurality of base classifiers are obtained as a Pareto optimal solution set for constructing a classifier set. In a test stage, a test sample set is obtained, and the test sample set and the training sample set have same sample attribute characteristics and labeling results. It is determined whether a trained classifier is a binary classifier or a multi-classifier, i.e., whether a plurality of classifier sets are included. In case of a binary classifier, a test sample set is input into the classifier set, and weights of respective base classifiers are determined as classification weights according to classification results of positive and negative samples by the base classifiers. In case of a multi-classifier, a test sample set is input into a classifier set, and classification weights of respective base classifiers are determined according to classification results of positive and negative samples by the base classifiers; and a weight of a category corresponding to each of classifier sets is determined as a category weight, according to classification weights of respective base classifier in each of classifier sets. In a use stage, data to be classified is input into a classifier set, and a classification result obtained by each base classifier is multiplied by a classification weight of the base classifier, and the multiplication results are summed, to finally form a classification result of the data to be classified. A category corresponding to the highest classification probability may be taken as the category of the data to be classified. Alternatively, a category corresponding to the highest classification result may be taken as the category of the data to be classified. In the present application, no limitation is made thereto.

According to an embodiment of the present application, by setting a plurality of training objectives of each of classifier sets, it ensures that classifiers have same classification performances for minority and majority categories of data, and avoids the classification accuracy of whole data by a classification model from being affected by different classification performances for minority and majority categories of data. By determining classification weights of respective base classifiers according to a proportional relationship between a determined amount of misclassified positive samples of the respective base classifiers and a maximum amount of the misclassified positive samples, and a proportional relationship between a determined amount of misclassified negative samples of the respective base classifiers and a maximum amount of the misclassified negative samples, the classification weights may more comprehensively reflect the classification performances of base classifiers for positive and negative samples, respectively, and classification weights of base classifiers may be determined more comprehensively and accurately.

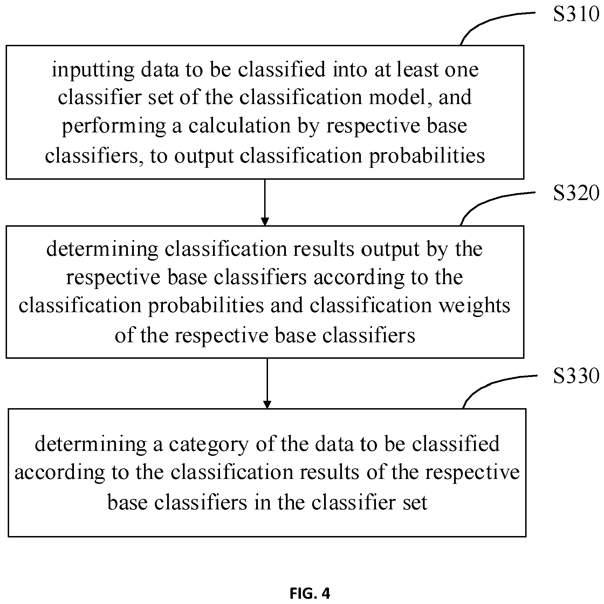

FIG. 4 is a schematic flowchart showing a classification model use method provided according to an embodiment of the present application. This embodiment may be applied to a case of classifying data to be classified. Typically, this embodiment may be applied to a case where the data to be classified is classified by using the classification model trained using the above classification model training method. The classification model training method disclosed in this embodiment may be performed by a classification model use apparatus, which may be implemented by software and/or hardware. Please refer to above embodiments for details not elaborated here. Referring to FIG. 4, the classification model is trained using above classification model training method. A classification model use method provided in this embodiment includes:

S310: inputting data to be classified into at least one classifier set of the classification model, and performing a calculation by respective base classifiers, to output classification probabilities.

Data to be classified may be the same as or different from training samples or test samples, and may have the same attribute and the same labeled category range as training samples or test samples. A classification model is a model trained using above classification model training method, which includes a classifier set. When an application scenario is of binary classification, the number of classifier sets may be one. When an application scenario is of multi-classification, the number of classifier sets may be determined according to the number of classified categories, e.g., being consistent therewith. A classifier set may include at least two base classifiers. In a use process, data to be classified is input into at least one classifier set of a classification model, and each base classifier in the classifier set calculates the data to be classified, to output a classification probability which may be a probability that the data to be classified being positive samples and/or negative samples.

S320: determining classification results output by the respective base classifiers according to the classification probabilities and classification weights of the respective base classifiers.

For example, since respective base classifiers have different classification performances which may be reflected by classification weights thereof, classification results of respective base classifiers are determined according to classification probabilities and classification weights of the base classifiers, e.g., the classification probabilities may be multiplied by the classification weights, so that classification results may include a participation degree of respective base classifiers in a classification process, and a base classifier with a better classification performance may have a higher participation degree, thereby improving the classification performance of a classification model for data to be classified, and further ensuring that classifiers may have same or similar classification performances for minority and majority categories of data and are suitable for a classification application of imbalanced data.

S330: determining a category of the data to be classified according to the classification results of the respective base classifiers in the classifier set.

For example, a category corresponding to the highest classification probability in classification results may be taken as the category of the data to be classified. Alternatively, a category corresponding to the highest classification result may be taken as the category of the data to be classified. In the present application, no limitation is made thereto.

Optionally, if a plurality of classifier sets are obtained, determining the category of the data to be classified according to the classification result of the respective base classifiers in the classifier set includes: accumulating, for each of the plurality of classifier sets, classification results of respective base classifiers in each classifier set, respectively, to obtain category classification results of respective classifier sets; and performing an accumulation based on the category classification results and category weights of the respective classifier sets, to obtain the category of the data to be classified.

In case of an application scenario of multi-classification, classification results of each of base classifiers may be determined based on classification weights and classification probabilities of the base classifiers, and the classification results of each of the base classifiers are accumulated as a category classification result corresponding to a classifier set. Since each of the classifier sets has its own category weight, category classification results and category weights of respective classifier sets may be accumulated, to obtain a final category of data to be classified, so that classification performances of respective classifier sets may be involved in the process of determining the category of data to be classified, thereby improving the accuracy of classified categories.

According to an embodiment of the present application, classification results are determined by taking classification probabilities and classification weights of respective base classifiers into account, and a category of data to be classified is determined, so that classification weights determined according to classification performances of respective base classifiers are integrated into a classification process, thereby improving an overall classification accuracy, which is suitable for a classification of imbalanced data.

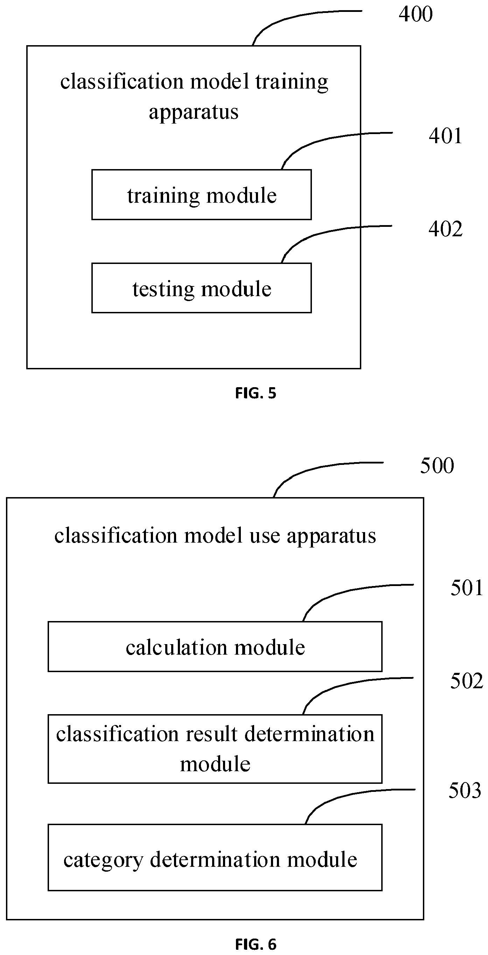

FIG. 5 is a structural diagram showing a classification model training apparatus provided according to an embodiment of the present application. Referring to FIG. 5, according to an embodiment of the present application, a classification model training apparatus 400 is provided. The apparatus 400 includes a training module 401 and a testing module 402.

In which, the training module 401 is configured to train a classification model by utilizing a training sample set and adopting an ensemble learning algorithm, to obtain at least one classifier set including at least two base classifiers; and

the testing module 402 is configured to test the at least one classifier set by utilizing a test sample set, to determine classification performances of respective base classifiers, and determining classification weights of the respective base classifiers according to the classification performances,

wherein the classification weights are used for determining weights of classification results of the respective base classifiers during performing a sample classification using the at least one classifier set.

Further, the training module 401 includes:

a classifier set determination unit, configured to train the classification model by utilizing the training sample set and adopting a multi-objective genetic programming algorithm, to obtain the at least one classifier set,

wherein a plurality of training objectives of each of the at least one classifier set at least include: an amount of positive samples misclassified by the classification model is minimum; and an amount of negative samples misclassified by the classification model is minimum.

Further, the classification model includes a plurality of classifier sets corresponding to different categories, respectively.

Further, the classification performances of the base classifiers include at least one of: a precision rate, a recall rate, a geometric mean of the precision rate and the recall rate, and a harmonic mean of the precision rate and the recall rate.

Further, the testing module 402 includes:

an amount counting unit, configured to test the at least one classifier set by utilizing the test sample set, and determine statistically an amount of misclassified positive samples and an amount of misclassified negative samples, wherein the amount of misclassified positive samples is an amount of negative samples in the test samples misclassified by the respective base classifiers as positive samples, and the amount of misclassified negative samples is an amount of positive samples in the test samples misclassified by the respective base classifiers as negative sample;

a maximum amount determination unit, configured to determine a maximum amount of the misclassified positive samples and a maximum amount of the misclassified negative samples based on the determined amount of the misclassified positive samples and the determined amount of the misclassified negative samples; and

a classification weight determination unit, configured to determine the classification weights of the respective base classifiers according to a proportional relationship between the determined amount of the misclassified positive samples of the respective base classifiers and the maximum amount of the misclassified positive samples, and a proportional relationship between the determined amount of the misclassified negative samples of the respective base classifiers and the maximum amount of the misclassified negative samples.

Further, the classification weight determination unit includes:

a formula calculation sub-unit, configured to determine the classification weights $w_j$ of the respective base classifiers according to a formula as follows:

$$w_j = \left( 1.0 - \frac{N_{fp}^j}{N_{fp}^{max}} \right)\left( 1.0 - \frac{N_{fn}^j}{N_{fn}^{max}} \right)$$

wherein $N_{fp}^j$ is an amount of misclassified positive samples, $N_{fn}^j$ is an amount of misclassified negative samples, $N_{fp}^{max}$ is a maximum amount of misclassified positive samples, $N_{fn}^{max}$ is a maximum amount of misclassified negative samples, and j is an amount of the base classifiers, which is a positive integer greater than or equal to 2.

Further, the apparatus includes:

a category weight determination module, configured to determine, for the classification weights of the respective base classifiers in each classifier set, a weight of a category corresponding to the classifier set as a category weight of the classifier set, in response to a plurality of classifier sets being obtained.

Further, the category weight determination module is specifically configured to:

accumulate the classification weights of the respective base classifiers in each classifier set, to obtain an accumulated weight, and determining the accumulated weight as the weight of the category corresponding to the classifier set.

Further, the training sample set and the test sample set are the same as or different from each other, attributes of sample data and labeled category ranges in the training sample set and the test sample set are the same.

The classification model training apparatus provided by an embodiment of the present application may perform the classification model training method provided by any embodiment of the present application, has corresponding functional modules to perform the method, and may achieve corresponding beneficial effects.

FIG. 6 is a structural diagram showing a classification model use apparatus provided according to an embodiment of the present application. Referring to FIG. 6, according to an embodiment of the present application, a classification model use apparatus 500 is provided, wherein a classification model is obtained by performing a training using the above classification model training method. The apparatus 500 includes a calculation module 501, a classification result determination module 502, and a category determination module 503.

The calculation module 501 is configured to input data to be classified into at least one classifier set of the classification model, and performing a calculation by respective base classifiers, to output classification probabilities.

The classification result determination module 502 is configured to determine the classification results output by the respective base classifiers according to the classification probabilities and the classification weights of the respective base classifiers.

The category determination module 503 is configured to determine a category of the data to be classified according to the classification results of the respective base classifiers in the at least one classifier set.

Further, in case that a plurality of classifier sets are obtained, the category determination module includes:

a classification result determination unit, configured to accumulate, for each of the plurality of classifier sets, classification results of respective base classifiers in each classifier set, respectively, to obtain category classification results of respective classifier sets; and
an accumulation unit, configured to perform an accumulation based on the category classification results and category weights of the respective classifier sets, to obtain the category of the data to be classified.

The classification model use apparatus provided by an embodiment of the present application may perform the classification model use method provided by any embodiment of the present application, has corresponding functional modules to perform the method, and may achieve corresponding beneficial effects.

According to an embodiment of the present application, a device and a readable storage medium are further provided by the present application.

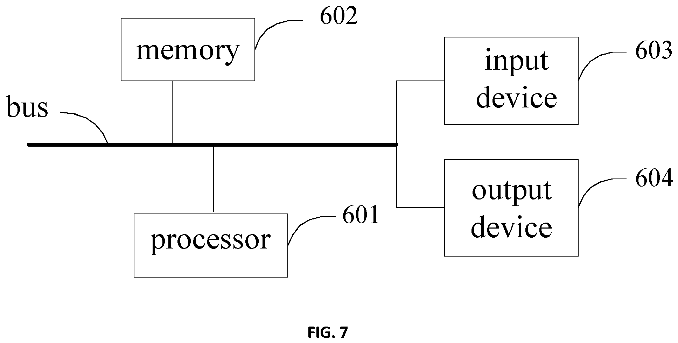

As shown in FIG. 7, it is a block diagram showing a device for implementing a classification model training method according to an embodiment of the present application. The device according to an embodiment of the present application may also be adopted to implement the classification model use method in above embodiments. The device is intended to represent various forms of digital computers, such as laptop computers, desktop computers, workbenches, personal digital assistants, servers, blade servers, mainframe computers, and other suitable computers. The electronic apparatus may also represent various forms of mobile devices, such as personal digital processors, cellular phones, intelligent phones, wearable devices, and other similar computing devices. Components shown in the present application, their connections and relations, and their functions are merely examples, and are not intended to limit the implementation of the application described and/or required herein.

As shown in FIG. 7, the device includes: one or more processors 601, a memory 602, and interfaces for connecting various components, including a high-speed interface and a low-speed interface. The various components are interconnected using different buses and may be mounted on a common motherboard or otherwise installed as required. The processor may process instructions executed within the electronic apparatus, including instructions for storing in or on a memory, to display graphical information of a Graphical User Interface (GUI) on an external input/output device (such as a display device coupled to the interface). In other implementations, multiple processors and/or multiple buses may be used with multiple memories and multiple memories, if desired. Similarly, multiple electronic apparatuses may be connected, each apparatus providing some of the necessary operations (for example, as a server array, a group of blade servers, or a multiprocessor system). In FIG. 7, one processor 601 is shown as an example.

The memory 602 is a non-transitory computer-readable storage medium provided in the present application. The memory stores instructions executable by at least one processor, so that the at least one processor may perform a classification model training method, or the classification model use method provided by the present application. The non-transitory computer-readable storage medium of the present application stores computer instructions, which are configured to enable a computer to perform a classification model training method or a classification model use method provided by the present application.

As a non-transitory computer-readable storage medium, the memory 602 may be used to store non-transitory software programs, non-transitory computer executable programs, and modules, such as program instructions/modules corresponding to a classification model training method or a classification model use method in embodiments of the present application (e.g., the training module 401 and the testing module 402 in FIG. 5, or the calculation module 501, the classification result determination module 502, and the category determination module 503 in FIG. 6). The processor 601 executes various functional applications and data processing of the server by running non-transitory software programs, instructions, and modules stored in the memory 602, that is, to implement a classification model training method or a classification model use method in above method embodiments.

The memory 602 may include a storage program area and a storage data area, where the storage program area may be used to store an application program required by an operating system or for at least one function; the storage data area may be used to store data created according to the use of a classification model training apparatus. In addition, the memory 602 may include a high-speed random-access memory, and may also include a non-transitory memory, such as at least one magnetic disk storage device, a flash memory device, or other non-transitory solid-state storage device. In some embodiments, the memory 602 may optionally include a memory set remotely relative to the processor 601, and these remote memories may be connected to a classification model training apparatus through a network. Examples of the above network include, but are not limited to, an Internet, an intranet, a local area network, a mobile communication network, and combinations thereof.

A device for implementing a classification model training method or a classification model use method may further include an input device 603 and an output device 604. The processor 601, the memory 602, the input device 603, and the output device 604 may be connected through a bus or in other manners. In FIG. 7, a connection through a bus is shown as an example.

The input device 603 may receive input numeric or character information, and generate key signal inputs related to a user setting and a function control of a classification model training apparatus, such as a touch screen, a keypad, a mouse, a trackpad, a touchpad, a pointing stick, one or more mouse buttons, a trackball, a joystick and other input devices. The output device 1004 may include a display device, an auxiliary lighting device (for example, an LED), a haptic feedback device (for example, a vibration motor), and the like. The display device may include, but is not limited to, a Liquid Crystal Display (LCD), a Light Emitting Diode (LED) display, and a plasma display. In some implementations, the display device may be a touch screen.

Various implementations of the systems and technologies described herein may be implemented in a digital electronic circuit system, an integrated circuit system, an application specific integrated circuit (ASIC), a computer hardware, a firmware, a software, and/or combinations thereof. These various implementations may include: implementations in one or more computer programs, where the one or more computer programs are executable and/or interpretable on a programmable system including at least one programmable processor, programmable processor, where the programmable processor may be a dedicated or general-purpose programmable processor that may receive data and instructions from a storage system, at least one input device, and at least one output device, and may transmit the data and instructions to the storage system, the at least one input device, and the at least one output device.

These computing programs (also known as programs, software, software applications, or codes) include machine instructions of a programmable processor and may be implemented by using a high-level procedural and/or object-oriented programming language, and/or an assembly/machine language. As used herein, the terms "machine-readable medium" and "computer-readable medium" refer to any computer program product, apparatus, and/or device used to provide machine instructions and/or data to a programmable processor (for example, a magnetic disk, an optical disk, a memory, and a programmable logic device (PLD)), including machine-readable media that receives machine instructions as machine-readable signals. The term "machine-readable signal" refers to any signal used to provide machine instructions and/or data to a programmable processor.

In order to provide an interaction with a user, systems and techniques described herein may be implemented on a computer, where the computer includes: a display device (for example, a Cathode Ray Tube (CRT) or liquid crystal display (LCD) monitor) for displaying information to a user; and a keyboard and pointing device (such as a mouse or a trackball) through which a user may provide input to a computer. Other kinds of devices may also be used to provide interaction with a user. For example, a feedback provided to a user may be a sensory feedback in any form (for example, a visual feedback, an auditory feedback, or a haptic feedback), and a user input (including an acoustic input, a voice input, or a tactile input) may be received in any form.

The systems and technologies described herein may be implemented in a computing system including a background component (for example, as a data server), a computing system including a middleware component (for example, an application server), or a computing system including a front-end component (for example, a user computer with a graphical user interface or a web browser, through which the user may interact with an implementation of the systems and technologies described herein), or a computer system including any combination of such a background component, a middleware component, or a front-end component. The components of the system may be interconnected by any form or medium of digital data communication (such as, a communication network). Examples of a communication network include a Local Area Network (LAN), a Wide Area Network (WAN), and the Internet.

A computer system may include a client and a server. The client and the server are generally remote from each other and usually interact through a communication network. The relationship between the client and the server is generated by computer programs running on corresponding computers and having a client-server relationship with each other.

It should be understood the steps in the various processes described above may be reordered or omitted, or other steps may be added therein. For example, the steps described in the application may be performed parallelly, sequentially, or in different orders, as long as the desired results of the technical solutions disclosed in the application may be achieved, to which no limitation is made herein.

Above specific embodiments do not constitute a limitation on the protection scope of the present application. It should be understood by those skilled in the art that various modifications, combinations, sub-combinations, and substitutions may be available according to design requirements and other factors. Any modifications, equivalent replacements and improvements made within the spirit and principle of the present application shall be covered within the protection scope of the present application.

**Claims**

1.  A classification model training method, comprising:

    training (S110) a classification model by utilizing a training sample set and adopting an ensemble learning algorithm, to obtain at least one classifier set comprising at least two base classifiers; and
    testing (S120) the at least one classifier set by utilizing a test sample set, to determine classification performances of respective base classifiers, and determining classification weights of the respective base classifiers according to the classification performances,
    wherein the classification weights are used for determining weights of classification results of the respective base classifiers during performing a sample classification using the at least one classifier set.

2.  The classification model training method according to claim 1, wherein training the classification model by utilizing the training sample set and adopting the ensemble learning algorithm, to obtain the at least one classifier set comprises:

    training (S210) the classification model by utilizing the training sample set and adopting a multi-objective genetic programming algorithm, to obtain the at least one classifier set,
    wherein a plurality of training objectives of each of the at least one classifier set at least comprise: an amount of positive samples misclassified by the classification model is minimum; and an amount of negative samples misclassified by the classification model is minimum.

3.  The classification model training method according to claim 1, wherein the classification model comprises a plurality of classifier sets corresponding to different categories, respectively.

4.  The classification model training method according to claim 1, wherein the classification performances of the base classifiers comprise at least one of: a precision rate, a recall rate, a geometric mean of the precision rate and the recall rate, and a harmonic mean of the precision rate and the recall rate.

5.  The classification model training method according to claim 1, wherein testing (S120) the at least one classifier set by utilizing the test sample set, to determine the classification performances of the respective base classifiers, and determining the classification weights of the respective base classifiers according to the classification performances comprises:

    testing (S220) the at least one classifier set by utilizing the test sample set, and determining statistically an amount of misclassified positive samples and an amount of misclassified negative samples, wherein the amount of misclassified positive samples is an amount of negative samples in the test samples misclassified by the respective base classifiers as positive samples, and the amount of misclassified negative samples is an amount of positive samples in the test samples misclassified by the respective base classifiers as negative samples;
    determining (S230) a maximum amount of the misclassified positive samples and a maximum amount of the misclassified negative samples based on the determined amount of the misclassified positive samples and the determined amount of the misclassified negative samples; and
    determining (S240) the classification weights of the respective base classifiers according to a proportional relationship between the determined amount of the misclassified positive samples of the respective base classifiers and the maximum amount of the misclassified positive samples, and a proportional relationship between the determined amount of the misclassified negative samples of the respective base classifiers and the maximum amount of the misclassified negative samples.

6. The classification model training method according to claim 5, wherein determining the classification weights of the respective base classifiers according to the proportional relationship between the determined amount of the misclassified positive samples of the respective base classifiers and the maximum amount of the misclassified positive samples, and the proportional relationship between the determined amount of the misclassified negative samples of the respective base classifiers and the maximum amount of the misclassified negative samples comprises:
determining the classification weights $w_j$ of the respective base classifiers according to a formula as follows:

$$ w_j = \left( 1.0 - \frac{N_{fp}^j}{N_{fp}^{max}} \right) \left( 1.0 - \frac{N_{fn}^j}{N_{fn}^{max}} \right) , $$

wherein $N_{fp}^j$ is an amount of misclassified positive samples, $N_{fn}^j$ is an amount of misclassified negative samples, $N_{fp}^{max}$ is a maximum amount of misclassified positive samples, $N_{fn}^{max}$ is a maximum amount of misclassified negative samples, and j is an amount of the base classifiers, which is a positive integer greater than or equal to 2.

7. The classification model training method according to claim 5 or 6, wherein after determining the classification weights of the respective base classifiers, the method further comprises:
determining, for the classification weights of the respective base classifiers in each classifier set, a weight of a category corresponding to the classifier set as a category weight of the classifier set, in response to a plurality of classifier sets being obtained.

8. The classification model training method according to claim 7, wherein determining, for the classification weights of the respective base classifiers in each classifier set, the weight of the category corresponding to the classifier set comprises:
accumulating the classification weights of the respective base classifiers in each classifier set, to obtain an accumulated weight, and determining the accumulated weight to obtain an accumulated weight, and determining the accumulated weight as the weight of the category corresponding to the classifier set.

9. The classification model training method according to claim 1, wherein the training sample set and the test sample set are the same as or different from each other, attributes of sample data and labeled category ranges in the training sample set and the test sample set are the same.

10. A classification model use method, wherein a classification model is obtained by performing a training using the classification model training method according to any one of claims 1 to 9, the classification model use method comprising:

inputting (S310) data to be classified into at least one classifier set of the classification model, and performing a calculation by respective base classifiers, to output classification probabilities; determining (S320) the classification results output by the respective base classifiers according to the classification probabilities and the classification weights of the respective base classifiers; and determining (S330) a category of the data to be classified according to the classification results of the respective base classifiers in the at least one classifier set.

11. The classification model use method according to claim 10, wherein in case that a plurality of classifier sets are obtained, determining the category of the data to be classified according to the classification results of the respective base classifiers in the classifier set comprises:

accumulating, for each of the plurality of classifier sets, classification results of respective base classifiers in each classifier set, respectively, to obtain category classification results of respective classifier sets; and performing an accumulation based on the category classification results and category weights of the respective classifier sets, to obtain the category of the data to be classified.

12. A classification model training apparatus (400), comprising a plurality of modules configured to implement the classification model training method according to any one of claims 1 to 9.

**13.** A classification model use apparatus (500), wherein a classification model is obtained by performing a training using the classification model training method according to any one of claims 1 to 9, the apparatus comprising a plurality of modules configured to implement the classification model use method according to any one of claims 10 to 11.

**14.** A non-transitory computer-readable storage medium for storing computer instructions, wherein the computer instruction, when executed by a computer, cause the computer to perform the classification model training method of any one of claims 1 to 9, or the classification model use method according to any one of claims 10 to 11.

**15.** A computer program product comprising computer executable instructions stored thereon, wherein the executable instructions, when executed by a processor (601), cause the processor (601) to implement the classification model training method of any one of claims 1 to 9, or the classification model use method according to any one of claims 10 to 11.

S110

training a classification model by utilizing a training sample set and adopting an ensemble learning algorithm, to obtain at least one classifier set comprising at least two base classifiers

S120

testing the at least one classifier set by utilizing a test sample set, to determine classification performances of respective base classifiers, and determining classification weights of the respective base classifiers according to the classification performances, wherein the classification weights are used for determining weights of classification results of the respective base classifiers during performing a sample classification using the at least one classifier set

FIG. 1

S210

training a classification model by utilizing a training sample set and adopting an ensemble learning algorithm, to obtain at least one classifier set comprising at least two base classifiers

S220

testing the at least one classifier set by utilizing the test sample set, and determining statistically an amount of misclassified positive samples and an amount of misclassified negative samples, wherein the amount of misclassified positive samples is an amount of negative samples in the test samples misclassified by the respective base classifiers as positive samples, and the amount of misclassified negative samples is an amount of positive samples in the test samples misclassified by the respective base classifiers as negative samples

S230

determining a maximum amount of the misclassified positive samples and a maximum amount of the misclassified negative samples based on the determined amount of the misclassified positive samples and the determined amount of the misclassified negative samples

S240

determining the classification weights of the respective base classifiers according to a proportional relationship between the determined amount of the misclassified positive samples of the respective base classifiers and the maximum amount of the misclassified positive samples, and a proportional relationship between the determined amount of the misclassified negative samples of the respective base classifiers and the maximum amount of the misclassified negative samples, wherein the classification weights are used for determining weights of classification results of the respective base classifiers during performing a sample classification using the at least one classifier set

**FIG. 2**

START

initializing base classifiers

training the base classifiers by utilizing training samples

updating the base classifiers by utilizing an evolutionary operator

performing iterative learning on the base classifiers

whether a termination condition is met

NO

YES

obtaining a Pareto optimal solution set

classifying test samples

whether it is a multi-classification

YES

calculating a classification weight of each of the base classifiers

NO

calculating a classification weight of each of the base classifiers

calculating a category weight for each of classifier sets

outputting a classification result

END

FIG. 3

S310

inputting data to be classified into at least one
classifier set of the classification model, and
performing a calculation by respective base
classifiers, to output classification probabilities

S320

determining classification results output by the
respective base classifiers according to the
classification probabilities and classification weights
of the respective base classifiers

S330

determining a category of the data to be classified
according to the classification results of the respective
base classifiers in the classifier set

**FIG. 4**

400

classification model training apparatus

401

training module

402

testing module

**FIG. 5**

500

classification model use apparatus

501

calculation module

502

classification result determination module

503

category determination module

**FIG. 6**

FIG. 7

Europäisches
Patentamt

European
Patent Office

Office européen
des brevets

# EUROPEAN SEARCH REPORT

Application Number

EP 21 15 1825

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/278013 A1 (YU JIANGSHENG [US] ET AL) 28 September 2017 (2017-09-28)<br>* abstract *<br>* paragraph [0032] - paragraph [0036] *<br>* paragraph [0042] - paragraph [0047] *<br>----- | 1-15 | INV.<br>G06N3/12<br>G06N20/20<br>G06N5/00 |
| X | US 2017/357879 A1 (ODAIBO STEPHEN GBEJULE [US] ET AL) 14 December 2017 (2017-12-14)<br>* abstract *<br>* paragraph [0019] *<br>* paragraph [0059] - paragraph [0060] *<br>----- | 1-15 | |
| X | US 2018/346151 A1 (STURLAUGSON LIESSMAN E [US] ET AL) 6 December 2018 (2018-12-06)<br>* abstract *<br>* paragraph [0056] - paragraph [0064] *<br>----- | 1-15 | |
| A | AHMADIAN K ET AL: "Multi-objective Evolutionary Approach for Biometric Fusion",<br>BIOMETRICS AND KANSEI ENGINEERING, 2009. ICBAKE 2009. INTERNATIONAL CONFERENCE ON, IEEE, PISCATAWAY, NJ, USA,<br>25 June 2009 (2009-06-25), pages 12-17, XP031519640,<br>ISBN: 978-0-7695-3692-7<br>* abstract *<br>----- | 2 | TECHNICAL FIELDS SEARCHED (IPC)<br><br>G06N |

The present search report has been drawn up for all claims

| Place of search | Date of completion of the search | Examiner |
|---|---|---|
| The Hague | 3 June 2021 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 15 1825

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2021

| Patent document cited in search report | Publication date | Patent family member(s) | Publication date |
|---|---|---|---|
| US 2017278013 A1 | 28-09-2017 | US 2017278013 A1<br>WO 2017162109 A1 | 28-09-2017<br>28-09-2017 |
| US 2017357879 A1 | 14-12-2017 | NONE | |
| US 2018346151 A1 | 06-12-2018 | NONE | |

EPO FORM P0459

For more details about this annex : see Official Journal of the European Patent Office, No. 12/82